# EUROPEAN PATENT APPLICATION

(11) **EP 1 228 848 A1**
(43) Date of publication of application: **07.08.2002**
(21) Application number: 99968422.8
(22) Date of filing: 23.11.1999
(51) Int. Cl.: B28D 1/04

(54) **CIRCULAR SAW**

(30) Priority: 25.06.1999 RU 99114054
(71) Applicant: Khachatryan, Khristofor Vachikovich, Moscow, 125047 (RU); Muradyan, Levon Muradovich, Moscow, 115446 (RU); Muradyan, Zhanna Levonovna, Moscow, 115446 (RU)
(72) Inventor: MURADYAN, Levon Muradovich, Moscow, 115446 (RU); MURADYAN, Zhanna Levonovna, Moscow, 115446 (RU)
(74) Representative: Patentanwälte Zellentin & Partner
(86) International application number: RU9900451
(87) International publication number: WO0100379

(57) **Zusammenfassung**

Die erfindungsgemäß vorgeschlagene Ringsäge ist zum Schneiden von harten Werkstoffen, vorwiegend von Stein, bestimmt und enthält einen Körper 1, an dem mittels Wälzführungen 3, die auf einem feststehenden Innenring 5 beweglich angeordnet sind, ein Antriebsring 2 mit Schneidelementen 2' beweglich befestigt ist, welcher mit einem Anzugs-Triebwerk kinematisch verbunden ist, das mindestens zwei Paare von kegeligen Treibrollen 11 umfaßt. Dabei ist der Innendurchmesser D₁ des Antriebsringes 2 größer als der Durchmesser D₂ eines Kreises, der die Wälzführungen 3 umhüllt.

## Description

### Technisches Gebiet

Die Erfindung bezieht sich auf Werkzeuge zur spanenden Bearbeitung verschiedener harter Werkstoffe, beispielsweise zur Steinbearbeitung, und betrifft insbesondere eine Ringsäge.

### Zugrundeliegender Stand der Technik

Zur Zeit werden zur spanenden Bearbeitung verschiedener Werkstoffe Kreissägen weitgehend verwendet. Ihre Verwendung ist jedoch für die Durchführung eines verhältnismäßig tiefen Schneidens uneffektiv, weil der Durchmesser des Kreissägeblattes die Schnittiefe und die Außenmaße des Schneidwerkzeuges etwa um das Dreifache übersteigen soll, was zur Vergrößerung der Abmessungen der Säge selbst führt.

Zur Durchführung eines tiefen Schneidens in harten Werkstoffen bei mäßigen Geschwindigkeiten des Ablaufs des technologischen Prozesses ist die Verwendung von Schneidwerkzeugen in Form von Ringsägen bekannt.

Es ist z.B. eine Ringsäge bekannt, die einen Antriebsring mit Schneidelementen, welcher entweder an einer Feststütze mittels Lagers montiert (SU Nr. 273702) oder zwischen zwei feststehenden Backen beweglich befestigt ist (SU Nr. 605971), und einen Antrieb enthält.

Nachteile dieser Sägen sind eine große Dicke des Antriebsringes mit Schneidelementen, bedingt durch die Notwendigkeit, eine hinreichend hohe Steifigkeit der Konstruktion der Säge sicherzustellen, ein hoher Belastungsgrad der Wälzführungen des Antriebsringes und eine niedrige Schnittgeschwindigkeit. Die große Dicke des Schneidwerkzeuges (des Antriebsringes mit den Schneidelementen) hat eine vergrößerte Sägeschnittbreite zur Folge, was wiederum eine Vergrößerung von Schnittkräften erfordert und die Ursache für die Zunahme der aufgewandten spezifischen Energie und den schnellen Verschleiß der Schneidelemente ist. Außerdem führt dies zu einem großen Verbrauch an zu bearbeitendem Werkstoff. Es ist auch zu bemerken, daß der hohe Belastungsgrad der Führungsvorrichtung die Betriebszeit der Säge verkürzt, während die niedrige Schnittgeschwindigkeit die Möglichkeit begrenzt, moderne Schneidelemente, beispielsweise Diamantbrikette einzusetzen, die bei hohen Schnittgeschwindigkeiten effektiv arbeiten. Überdies wird bei Vergrößerung der Schnittiefe und bei der Durchführung des geneigten Schneidens, besonders bei negativen Neigungswinkeln des Schneidwerkzeuges, die Zuführung einer Kühlflussigkeit in die Schneidzone wesentlich erschwert, was die Nutzungsdauer der Schneidelemente ebenfalls negativ beeinflußt.

### Offenbarung der Erfindung

Der vorliegenden Erfindung liegt die Aufgabe zugrunde, eine Ringsäge mit einer solchen konstruktiven Ausführung anzugeben, die es gestatten würde, die Schnittgeschwindigkeit bei Erhöhung der Nutzungsdauer der Schneidelemente der Säge zu steigern.

Die Ringsäge zum Schneiden von harten Werkstoffen, vorwiegend von Stein, mit einem Körper, einem Antriebsring mit Schneidelementen, der mittels Wälzführungen am Körper beweglich befestigt ist, welche auf einem feststehenden Innenring beweglich angeordnet sind, und einem Antrieb, kennzeichnet sich dadurch, daß der Antriebsring auf der Außenfläche des Körpers montiert und mit dem Antrieb kinematisch verbunden ist, welcher ein Anzugs-Triebwerk darstellt, das mindestens zwei Paare von kegeligen Treibrollen umfaßt, wobei der Innendurchmesser D₁ des Antriebsringes größer ist als der Außendurchmesser D₂ eines Kreises, der die Wälzführungen umhüllt.

Es ist zweckmäßig, daß der Sägenkörper mit inneren Nuten für die Zuführung von Kühlmischungen, z.B. Wasser, unmittelbar in die Schneidzone ausgerüstet ist.

Es ist erwünscht, daß der Sägenkörper eine segmentale Ausnehmung aufweist, in der das Anzugs-Triebwerk untergebracht ist, und mit einem Führungskanal versehen ist, dessen geometrische Achse die Form einer glatten Kurve besitzt.

Es ist günstig, daß die Wälzführungen der Säge in einem Käfig angeordnet sind.

Es ist möglich, daß die Wälzführungen der Säge und der Käfig aus Werkstoffen mit niedriger Kontaktfestigkeit hergestellt sind.

Die angegebene konstruktive Ausführung ermöglicht eine wesentliche Verringerung der Abmessungen der Säge, ohne daß ihre Betriebsdaten verschlechtert werden. Darüber hinaus erlaubt sie, die Betriebsdauer der Säge beträchtlich zu verlängern.

### Kurze Beschreibung der Zeichnungen

Zum besseren Verständnis der Erfindung sind nachstehend konkrete Ausführungsformen derselben unter Bezugnahme auf beigefügte Zeichnungen angeführt, in denen es zeigt:
Fig. 1 in schematischer Darstellung die erfindungsgemäße Ringsäge, Gesamtansicht mit Ausbrüchen;
Fig. 2 einen Schnitt nach Linie II - II der Fig. 1;
Fig. 3 die zweite Ausführungsform der erfindungsgeaäßen Ringsäge, Gesamtansicht mit Ausbrüchen;
Fig. 4 einen Schnitt nach Linie IV - IV der Fig. 3.

### Beste Ausführungsform der Erfindung

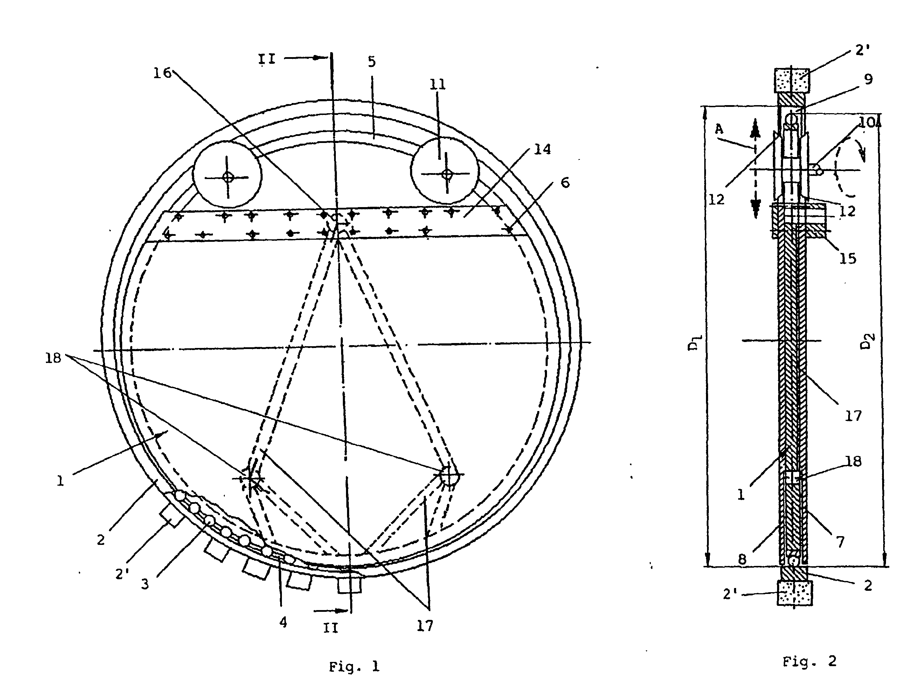

Die erfindungsgemäße Ringsäge enthält einen Körper 1 (Fig. 1, 2), an dem ein beweglicher Antriebsring 2 mit Schneidelementen 2' montiert ist, der auf Kugel-Wälzführungen 3 gelagert ist, welche mittels eines Käfigs 4 auf einem feststehenden Innenring 5 beweglich befestigt sind. Der feststehende Innenring 5 ist am Körper 1 der Säge mit Hilfe von Anzugsschrauben 6 und Seitenplatten 7, 8 befestigt. Der Sägenkörper 1 weist eine segmentale Ausnehmung 9 auf, in der ein Anzugstriebwerk untergebracht ist, das aus zwei Wellen 10 besteht, auf denen paarweise symmetrisch in bezug auf den Antriebsring 2 zwei kegelige Rollen 11 befestigt sind. Der Kegelwinkel der Rollen 11 entspricht dem Winkel von Fasen 12, die an der Kreuzung der Seitenflächen der Platten 7, 8 und der Innenfläche des Antriebsringes 2 vorgesehen sind.

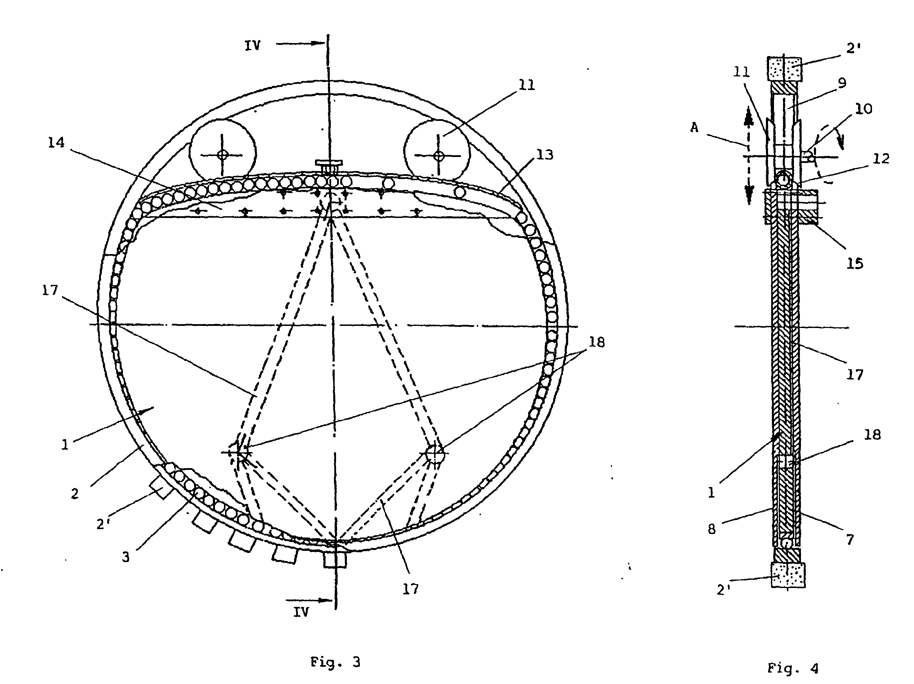

Eine käfiglose konstruktive Ausführung der vorgeschlagenen Erfindung (Fig. 3, 4) unterscheidet sich von der (in Fig. 1, 2 dargestellten) Ausführung mit Käfig dadurch, daß die Kugel-Wälzführungen 3 keine volle Kreisbewegung über den Umfang des feststehenden Innenringes 5 vollführen. In der Zone, wo ein Druck von seiten des äußeren beweglichen Antriebsringes 2 auf die Wälzführungen 3 fehlt, setzen diese ihre Bewegung in einem Führungskanal 13 fort, der am Sägenkörper 1 mit Hilfe der Seitenplatten 7, 8 befestigt ist. Damit sich die Wälzführungen 3 mit einem minimalen Widerstand bewegen, besitzt die geometrische Achse des Führungskanals 13 die Form einer glatten Kurve. Die Wälzführungen 3 treten mit der Innenfläche des äußeren Antriebsringes 2 am Ende des Führungskanals 13 erneut in Kontakt, wo durch die Wirkung von Triebkräften der Spalt zwischen dem Antriebsring 2 und dem Sägenkörper 1 erweitert ist.

Der Sägenkörper 1 (Fig. 1) wird mit Hilfe einer Leiste 14 und Schrauben 6 an einem Kragarm 15 einer Maschine (in der Zeichnung nicht gezeigt) festgemacht. Der Sägenkörper 1 ist zusammen mit dem Kragarm 15 relativ zum Anzugs-Triebwerk vertikal verschiebbar (siehe Fig. 2 in Pfeilrichtungen A). Die Kühlflüssigkeit wird durch einen am Kragarm 15 befestigten Stutzen 16 zugeführt.

Der Innendurchmesser D₁ des Antriebsringes 2 ist etwas größer als der Durchmesser D₂ eines die Kugel-Wälzführungen 3 umhüllenden Kreises, was es erlaubt, eine größtmögliche Anzahl dieser Kugel-Wälzführungen 3 einzubauen und dadurch die spezifische Belastung des Antriebsringes 2 und dieser Wälzführungen 3 zu vermindern. Die niedrige spezifische Belastung der Wälzführungen 3 der Ringsäge ermöglicht es, diese Wälzführungen 3 und den Käfig, welche aus Werkstoffen mit einer verhältnismäßig niedrigen Kontaktfestigkeit hergestellt sind, einzusetzen oder auf ihrer Oberfläche eine Schicht aus einem korrosionsbeständigen Material, beispielsweise aus Buntmetallen oder Kunststoffen zu erzeugen, was die Möglichkeit bietet, die erfindungsgemäße Säge ohne Schmierung in einem Fluidum zu betreiben. Und die Möglichkeit zur Auswechselung der Wälzführungen 3 verlängert wesentlich die Betriebsdauer der Säge. Außerdem verleiht die kleine Dicke des Antriebsringes 2 diesem die erforderliche Biegsamkeit und erlaubt es, durch die vertikale Verschiebung des Sägenkörpers 1 relativ zum Anzugs-Triebwerk den Antriebsring 2 ein- oder abzubauen sowie die notwendige Berührungskraft zu erzeugen, um zu ihm mit Hilfe der kegeligen Rollen 11 die Rotationsbewegung entsprechender Leistung zu übertragen.

Der Sägenkörper 1 (Fig. 2) ist mit einem Paket von mit ihm fest verbundenen Platten 7, 8 versehen. An den Innenflächen der Platten 7, 8 und des Körpers 1 sind Nuten 17 eingearbeitet, die den zentralen Stutzen 16 (Fig. 1) für die Zuführung der Kühlflüssigkeit mit peripherischen Düsen 18 verbinden. Die Zuführung der Druckflüssigkeit unmittelbar in die Schneidzone gewährleistet die Kühlung der Schneidelemente 2' und der Laufteile der Bingsäge bei einem vergleichsweise geringen Wasserdurchsatz und erzeugt auch einen Schleier an den Seitenflächen des beweglichen Ringes 2, wodurch das Gelangen von Produkten des Schnittvorgangs in die wälzführungen 3 vermieden wird. Das innere Kühlsystem gestattet es, gemeinsam mit der Kühlflüssigkeit Druckluft in die Schneidzone zu ihrer Reinigung von den Produkten des Schnittprozesses über die vorhandenen Nuten 17 zuzuführen.

Während des Betriebs der Säge wird der feststehende Ring 5 nach einer bestimmten Zeitspanne durch die Bedienungsperson relativ zum Sägenkörper durchgedreht, wodurch eine gleichmäßige Abnutzung von Führungsbahnen sichergestellt und die Nutzungsdauer der Säge verlängert wird.

Durch Verschiebung des Sägenkörpers 1 relativ zu den kegeligen Rollen 11 wird der Antriebsring 2 angezogen, wobei ein vollständiges Anliegen der unteren Hälfte der Führungsnut des Antriebsringes 2 an den Kugelführungen 3 sichergestellt wird. Nach Erreichen eines erforderlichen Kontaktdrucks zwischen den kegeligen Rollen 11 und dem Antriebsring 2 wird dem letzteren die Rotationsbewegung erteilt.

Der Schnittvorschub erfolgt mit Hilfe des Kragarmes 15 über den Sägenkörper 1.

### Gewerbliche Verwertbarkeit

Die vorliegende Erfindung kann bei der spanenden Bearbeitung verschiedener harter Werkstoffe, beispielsweise bei der Steinbearbeitung, angewendet werden.

## Patentansprüche

1. Ringsäge zum Schneiden von harten Werkstoffen, vorwiegend von Stein, mit einem Körper (1), einem Antriebsring (2) mit Schneidelementen (2'), der mittels Wälzführungen (3) am Körper (1) beweglich befestigt ist, welche auf einem feststehenden Innenring (5) beweglich angeordnet sind, und einem Antrieb, **dadurch gekennzeichnet, daß** der Antriebsring (2) auf der Außenfläche des Körpers (1) montiert und mit dem Antrieb kinematisch verbunden ist, welcher ein Anzugs-Triebwerk darstellt, das mindestens zwei Paare von kegeligen Treibrollen (11) umfaßt, wobei der Innendurchmesser D₁ des Antriebsringes (2) größer ist als der Durchmesser D₂ eines Kreises, der die Wälzführungen (3) umhüllt.

2. Ringsäge nach Anspruch 1, **dadurch gekennzeichnet, daß** ihr Körper (1) mit inneren Nuten (17) für die Zuführung von Kühlmischungen, z.B. Wasser, unmittelbar in die Schneidzone ausgerüstet ist.

3. Ringsäge nach Anspruch 1, **dadurch gekennzeichnet, daß** der Körper (1) eine segmentale Ausnehmung (9) aufweist, in der das Anzugs-Triebwerk untergebracht ist, und mit einem Pührungskanal (13) versehen ist, dessen geometrische Achse die Form einer glatten Kurve besitzt.

4. Ringsäge nach Anspruch 1, **dadurch gekennzeichnet, daß** die wäizführungen (3) in einem Käfig (4) angeordnet sind.

5. Ringsäge nach Anspruch 1, **dadurch gekennzeichnet, daß** die Wälzführungen (3) und der Käfig (4) aus Werkstoffen mit einer niedrigen Kontaktfestigkeit hergestellt sind.
